# EUROPÄISCHE PATENTSCHRIFT

(11) **EP 0 459 538 B1**
(45) Veröffentlichungstag und Bekanntmachung des Hinweises auf die Patenterteilung: **15.09.1993**
(21) Anmeldenummer: 91113766.9
(22) Anmeldetag: 14.10.1988
(51) Int. Cl.: B60M 1/28

(54) **Gleisverfahrbare Maschine zum Verlegen des Fahrdrahtes und/oder des Tragseiles einer Gleis-Oberleitung**
Railroad machine to lay the power and/or supporting wire of track overhead line
Machine pour voie ferroviaire pour poser le câble d'alimentation et/ou porteur d'un caténaire de voie

(43) Veröffentlichungstag der Anmeldung: 04.12.1991
(62) Teilanmeldung aus: 88890258.2
(73) Patentinhaber: Franz Plasser Bahnbaumaschinen- Industriegesellschaft m.b.H., 1010 Wien (AT)
(72) Erfinder: Theurer, Josef, A-1010 Wien (AT); Oellerer, Friedrich, Dipl.Kfm., A-4040 Linz (AT); Gruber, Leopold Rudolf, A-3270 Scheibbs (AT)

(56) Entgegenhaltungen:
- DE-A- 526 889
- DE-A- 2 012 248
- FR-A- 2 129 540

## Beschreibung

Die Erfindung betrifft eine gleisverfahrbare Maschine zum kontinuierlichen verlegen des Fahrdrahtes und/oder des Tragseiles einer Oberleitung eines Gleises, mit einem auf Schienenfahrwerken gelagerten und über einen auf die Verlegegeschwindigkeit abstellbaren Fahrantrieb verfahrbaren Maschinenrahmen, Speichertrommeln für den Fahrdraht bzw. das Tragseil, einer diesen vorgeordneten und über einen Antrieb und eine Steuereinrichtung beaufschlagbaren Zugspannungsvorrichtung - der wenigstens eine Führungsrolle zugeordnet ist - und einer über Antriebe höhenverstellbaren und einen verschwenkbaren Auslegerarm zur Höhen- und Seitenverstellung einer Stütz- und Führungsrolle aufweisenden Hubvorrichtung.

Es ist - gemäß Buch von I.I. Wlassow "Fahrleitungsnetz", Fachbuchverlag Leipzig 1955, Seiten 214 bis 226 - eine aus einem Tragseil und einem Fahrdraht bestehende Oberleitung oberhalb einer Schienenstrecke in der Weise zu verlegen, daß zunächst das Tragseil mit einem Ende festgelegt und dann über an den Befestigungsstellen angeordnete Montagerollen geführt wird. Zur Verlegung wird ein Montage-Schienenfahrzeug verwendet, welches das Tragseil enthaltende Trommeln trägt, die drehbar gelagert und mit Trommelbremsen versehen sind. Nach Verlegung eines Tragseilabschnittes wird dieses Tragseil mit einem Flaschenzug gespannt und mit seinem Ende an einer Endstruktur befestigt. Anschließend werden Hängeseile verlegt, und es wird der Fahrdraht in gleicher Weise verlegt und am Tragseil mit Hilfe von Hilfshängeseilen aufgehängt. Darauf wird der Fahrdraht mit Hilfe eines oder mehrerer Flaschenzüge gespannt und befestigt, und es wird dann der Fahrdraht an den endgültigen Hängeseilen befestigt. Die Verlegung einer Oberleitung in dieser Weise erfordert einen erheblichen Arbeitsaufwand. Das Abrollen bzw. die Aufnahme des Tragseiles und des Fahrdrahtes auf den vorgesehenen Trommeln ist, bedingt durch die nicht parallele Lage des Drahtes bzw. des Seiles zur Gleisachse, relativ schwierig und nur mit großem Zeitaufwand durchführbar, um ein einwandfreies Ablaufen von der Trommel bis zur endgültigen Lage des Seiles und des Drahtes herstellen zu können.

Es ist auch - gemäß Zeitschrift "Japanese Railway Engineering" Band 9, 1968, Seiten 23 bis 25 - ein Inspektionswagen zur Inspektion und zur Reparatur von Fahrdrähten bekannt, auf dem Trommeln mit dem Fahrdraht drehbar gelagert sind, die mit Hilfe von Öldruckbremsen gebremst werden können, so daß der Fahrdraht unter Spannung verlegt werden kann. Mit diesem Inspektionswagen wird nicht eine Neuverlegung einer gesamten, aus Tragseil und Fahrdraht bestehenden Oberleitung durchgeführt, sondern nur ein abgenutzter Fahrdraht durch einen neuen Fahrdraht bei bereits vorhandenem Tragseil mit den vorhandenen Hängeseilen ersetzt. Mit diesem Inspektionswagen ist ebenso eine rasche und genaue Verlegung des Fahrdrahtes und/oder des Tragseiles - auf Grund der zick-zack-förmigen bzw. beschriebenen nicht-parallelen Lage des Drahtes zur Gleisachse - nicht möglich.

Es ist ferner - gemäß DE-PS 526 889 - eine Einrichtung zur Verlegung einer Fahrleitung für elektrische Eisenbahnen bekannt in Form eines Schienenfahrzeuges, auf dem mehrere Drahttrommeln gelagert sind und ein Hubarm - zum Anheben der von den Trommeln ablaufenden Drähte auf die Höhe der oberhalb der Schienen befindlichen Befestigungshaken - angeordnet ist. Mit dieser Einrichtung werden mehrere Fahrdrähte gleichzeitig verlegt, wobei aber die einzelnen Drähte nicht miteinander verbunden sind. Ein genauer Ablauf von den Drahttrommeln ist auf Grund der zu dieser bzw. zur Gleisachse nicht genau parallelen Lage der Drähte ebenso schwierig und ungenau und erfordert einen hohen Zeitaufwand.

Schließlich ist - gemäß DE-PS 22 11 247 - eine Maschine zum "vorläufigen" Installieren einer Oberleitung oberhalb einer Schienenstrecke mit einem Schienenfahrzeug in der eingangs beschriebenen Art bekannt. Auf diesem selbstverfahrbaren Schienenfahrzeug sind hiebei folgende Vorrichtungen angeordnet: Trommel zum Speichern des Tragseiles und des Fahrdrahtes und zu deren Ausgabe mit gesteuerter Zugkraft, eine Hakensuchvorrichtung, eine Zugspannungs-Steuervorrichtung mit Antrieb zur Aufbringung der Längszugkraft, eine Vorrichtung zum Abgeben der Drahthänger, eine in Abhängigkeit von einem Tastsignal arbeitende Draht-Aufhängevorrichtung zum Aufhängen des Tragseiles und Einhängen in den Haken sowie eine Verankerungsvorrichtung für das andere Ende des Fahrdrahtes bzw. des Tragseiles. Mit der zwischen den Drahttrommeln und dem oberen Bereich des Fahrdrahtes und des Tragseiles dazwischengeschalteten, als Hubarm ausgebildeten und über einen Antrieb höhenverstellbaren Hubvorrichtung wird über einen mit zwei in Maschinenlängsrichtung im Abstand auf einem Tragarm angeordneten und mit relativ kleinem Durchmesser ausgebildeten Tragseil-Führungsrollen der Draht und das Seil gehoben und abgestützt, um über eine Führungsrolle mit ebenso kleinem Durchmesser über die Zugspannungs-Steuervorrichtung bis zu den Trommeln geführt zu werden. - Diese bekannte Maschine ist im Aufbau relativ aufwendig, um ein vorläufiges bzw. provisorisches Verlegen des Fahrdrahtes und des Tragseiles unter Spannung durchführen zu können. Auch mit diesen Vorrichtungen ist ein genauer Ablauf der Drähte von der Trommel und auch von der Zugspannungs-Steuervorrichtung und den Führungsrollen schon auf Grund der nicht-parallelen bzw. endgültigen Lage des Fahrleitungsdrahtes und des Tragseiles zu diesen Vorrichtungen (Zick-zack-Verlegung) nicht möglich und dadurch auch keine genaue Verlegung sowohl für die Endlage als auch für eine gewünschte rasche Montage erzielbar. Darüber hinaus ist der Abstand von der Hubvorrichtung bis zu den Drahttrommeln in Maschinenlängsrichtung relativc groß, wodurch eine relativ große Endlänge der zu verlegenden Drähte bzw. Seile bzw. lange Anschluß-Verbindungdrähte in nachteiliger Weise erforderlich sind. - Es ist insbesondere ein sehr aufwendiger, komplizierter Mechanismus dieser bekannten Maschine, nämlich die Hakensuchvorrichtung einerseits und die Vorrichtung zum Abgeben der provisorischen Hänger in Verbindung mit der Draht-Aufhängevorrichtung andererseits, erforderlich, um überhaupt einigermaßen das Nachführen des mit den Führungsrollen ausgestatteten höhen- und seitenverschwenkbaren Tragarmes auf der höhenverstellbaren Arbeitsbühne entsprechend dem wechselnden Richtungsverlauf eines von Mast zu Mast zu verlegenden Drahtes - und das nur provisorisch - zu ermöglichen. Das Aufhängen des gespannten Seiles erfolgt mit dieser Vorrichtung über die zwei im Abstand voneinander angeordneten Führungsrollen, welche mit ihrem Tragarm hochgefahren werden und wobei der dazwischen befindliche Seilabschnitt auf dem provisorischen Haken aufgehängt wird. Diese provisorische Verlegung ist sehr unwirtschaftlich und in der Durchführung sehr aufwendig und umständlich, und weiters sind nach diesem vorläufigen Installieren der Oberleitung die provisorischen Hänger in einer neuerlichen Arbeitsfahrt zu entfernen, um die für Dauer vorgesehenen Befestigungsmittel im Zuge einer neuerlichen Spannung und Ausrichtung des Fahrdrahtes montieren zu können.

Die Aufgabe der Erfindung besteht nun darin, eine Maschine der eingangs beschriebenen Art zu schaffen, mit der eine Verlegung des Tragseiles und/oder des Fahrdrahtes einer Oberleitung unter hoher Zugspannung durchführbar ist.

Diese Aufgabe wird mit einer gleisverfahrbaren Maschine der eingangs beschriebenen Art dadurch gelöst, daß die Zugspannungsvorrichtung aus zwei im Durchmesser gleich großen, durch einen Antrieb miteinander drehverbundenen und zur mehrfachen Umwicklung des Fahrdrahtes bzw. Tragseiles ausgebildeten, in maschinenlängsrichtung voneinander distanzierten Umlenkrollen zusammengesetzt ist, denen ein hydraulischer Drehantrieb zugeordnet ist.

Eine derartige als Seilwinde wirksame Zugspannungsvorrichtung ermöglicht unter konstruktiv relativ einfacher und robuster Ausbildung die Übertragung relativ hoher Bremskräfte zur Erzeugung einer gleichmäßig hohen Zugspannung des Tragseiles oder Fahrdrahtes. Damit ist sichergestellt, daß die sektorenweise zu montierende Oberleitung in besonders wirtschaftlicher Weise bereits bei der erstmaligen Verbindung mit den Auslegern in der vorschriftsmäßigen Spannung für eine endgültige Montage fixierbar ist.

Die verschwenkbare Lagerung der Umlenkrolle bzw. der Zugspannungsvorrichtung am Maschinenrahmen gestattet eine sichere und problemlose Anpassung des Seil- oder Drahtablaufes an die seitliche Verschwenkung der vorgeordneten Stütz- und Führungsrolle.

Mit einer in Anspruch 8 angeführten vorteilhaften Weiterbildung ist unter Vermeidung einer zu hohen Biegebeanspruchung des Fahrdrahtes oder Tragseiles eine genaue und sichere Führung in einem relativ langen Umlenkbereich der Führungsrille gewährleistet bzw. erst eine störungsfreie Umlenkung derartiger biegesteifer Drähte erzielbar.

Weitere vorteilhafte Ausgestaltungen der Erfindung sind in der nachfolgenden Beschreibung angeführt.

Im folgenden wird die Erfindung an Hand zweier in der Zeichnung dargestellter Ausführungsbeispiele und einiger Detail-Varianten näher beschrieben.

Es zeigen:
Fig. 1 eine Seitenansicht einer erfindungsgemäß ausgebildeten Maschine zum kontinuierlich strecken- bzw. abschnittsweisen Verlegen oder Aufnehmen des Fahrdrahtes und/oder Tragseiles einer Oberleitung - in einer Stellung unmittelbar nach einem Fahrleitungsmast beim Verlegevorgang - mit einem in Arbeitsrichtung nachfolgenden Gleis-Oberbau- oder Turmwagen,
Fig. 2 eine Draufsicht auf die Maschine gemäß Fig.1, jedoch zum besseren Verständnis mit den Draht- bzw. Seil-Trommeln in einer Mittel-Stellung und ohne die in Fig.5 dargestellten Stütz- und Führungs-Rollen,
Fig. 3 eine vergrößerte Draufsicht auf eine von zwei als Seilwinde ausgebildeten Zugspannungs-Vorrichtungen - in Verlegestellung - und die beiden mit einer Hub-Vorrichtung verbundenen Stütz- und Führungs-Rollen,
Fig. 4 einen vergrößerten Querschnitt durch die Maschine in der obbeschriebenen Stellung gemäß den Linien IV-IV in Fig.2,
Fig. 5 eine vergrößerte Draufsicht auf die beiden Stütz- und Führungs-Rollen in einer Mittel-Stellung nach Fig.2,
Fig. 6 ein Ausführungsbeispiel von mit einer Hub-Vorrichtung verbundenen Stütz- und Führungs-Rollen zur Umlenkung des Tragseiles bzw. Fahrdrahtes in die Soll-Höhenlage,
Fig. 7 ein anderes schematisch dargestelltes Ausführungsbeispiel von über einen Antrieb gegeneinander verstellbaren Stütz- und Führungs-Rollen, die mit der als Schwenk-Kran ausgebildeten Hub-Vorrichtung verbunden sind und
Fig. 8 eine schematisch dargestellte Seitenansicht zweier erfindungsgemäß ausgebildeter und jeweils mit Arbeitsfahrzeugen verbundener Maschinen zur kontinuierlichen Demontage und Aufwickeln einer alten und Abwickeln und endgültiger Montage einer neuen Gleis-Oberleitung.

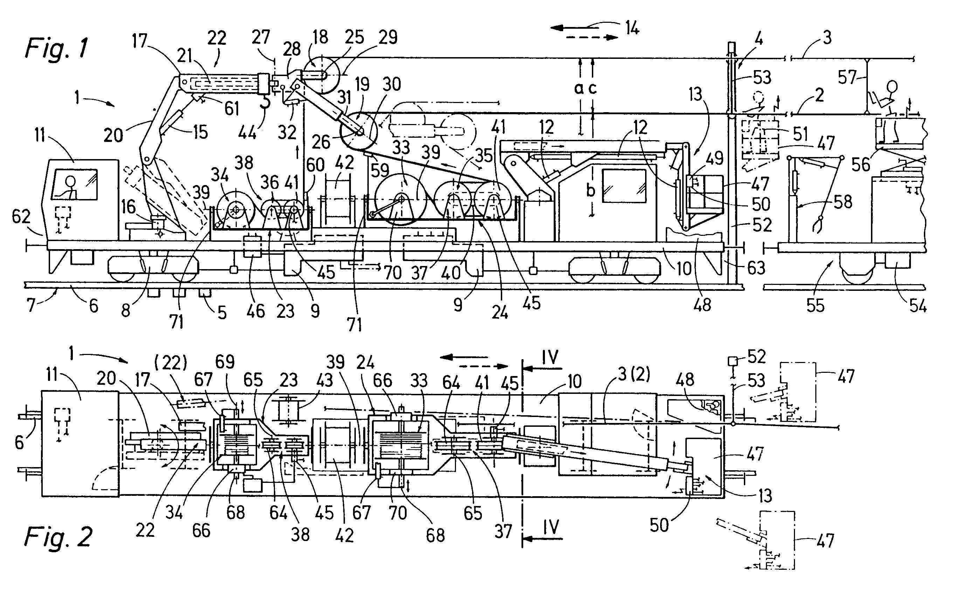

Eine in Fig. 1 und 2 dargestellte Maschine 1 zum kontinuierlichen strecken- bzw. abschnittsweisen Verlegen oder Aufnehmen eines Fahrdrahtes 2 und/oder eines Tragseiles 3 einer Oberleitung 4 ist auf einem aus Schwellen 5 und Schienen 6 gebildeten Gleis 7 verfahrbar. Die Maschine 1 weist einen auf Schienenfahrwerken 8 gelagerten und über wenigstens einen auf die Verlegegeschwindigkeit abstellbaren Haupt- bzw. Fahrantrieb 9 verfahrbaren Maschinenrahmen 10 sowie eine Fahrkabine 11 und eine über eine Antriebs-Anordnung 12 höhenverstell- und seitenverschwenkbare Arbeitsbühne 13. auf. Der Haupt- bzw. Fahrantrieb 9 ist für eine Zugkraft von 10 bis 12 Tonnen und eine Befahrbarkeit von Steigungen bis zu 30 Promille ausgebildet. Sollte lediglich ein einziger, beispielsweise in Fig. 1, links, dargestellter Haupt- bzw. Fahrantrieb 9 vorgesehen sein, so ist dieser über die strichpunktiert dargestellten Leitungen zur Versorgung der verschiedenen Antriebe, insbesondere die Antriebe für die Seilwinden, ausgebildet. In der durch einen Pfeil 14 dargestellten Arbeitsrichtung der Maschine 1 unmittelbar hinter der Fahrkabine 11 ist ein über Antriebe 15,16 höhenverstell- und verschwenkbarer Ausleger-Arm 17 zur Höhen- und Seitenverstellung einer zwei Stütz- und Führungs-Rollen 18,19 aufweisenden Hub-Vorrichtung 20 vorgesehen. Der Ausleger-Arm 17 ist über Antriebe 21 teleskopartig bis zu einer Länge von 10 m verstellbar ausgebildet und mit der als Schwenk-Kran 22 ausgebildeten Hub-Vorrichtung 20 verbunden und über die Antriebe 21 mit den beiden Stütz- und Führungs-Rollen 18,19 in Maschinenlängsrichtung wenigstens bis etwa oberhalb des Mittelbereiches zwischen zwei Trägerrahmen 23,24 verstellbar ausgebildet. Jede der beiden Stütz- und Führungs-Rollen 18,19 ist mit iherer jeweiligen Rollen-Achse 25,26 am Endbereich des mit dem Ausleger-Arm 17 über eine vertikale Achse 27 verdrehbaren Traggliedes 28 zur seitlichen Verschwenkbarkeit zusätzlich um eine senkrecht oder zur Draht- bzw. Seilrichtung im wesentlichen parallel verlaufende Schwenkachse 29,30 über eine Rollen-Halterung 31 drehbar gelagert. Die für den Fahrdraht 2 vorgesehene Stütz- und Führungs-Rolle 19 ist zur anderen Stütz- und Führungs-Rolle 18 entsprechend einer gewünschten Soll-Lage über einen mit einem Hebelgestänge verbundenen Antrieb 32 verstellbar ausgebildet. Die zur Spannung bzw. Führung und Halterung des Fahrdrahtes 2 vorgesehene Stütz- und Führungs-Rolle 19 ist in Arbeitsrichtung der Maschine 1 der Stütz- und Führungs-Rolle 18 für das Tragseil 3 nachgeordnet.

Jeder der beiden in Maschinenlängsrichtung hintereinander angeordneten und wippenartig ausgebildeten Trägerrahmen 23,24 ist jeweils mit einer Draht- bzw. Seil-Trommel 33,34 für den Fahrdraht 2 bzw. das Tragseil 3 und einer eigenen als Seilwinde 35,36 ausgebildeten Zugspannungs-Vorrichtung 37,38 verbunden und jeweils um eine in Maschinenlängsrichtung verlaufende Achse 39 verschwenkbar am Maschinenrahmen 10 gelagert. Auf dieser Draht- bzw. Seil-Trommel sind etwa 900 bis 1600 m Tragseil bzw. Fahrdraht mit einem Gewicht von etwa 2 bis 3 Tonnen aufgewickelt. Die Querschnittsfläche von Tragseil und Fahrdraht beträgt etwa 70 bis 110 mm². Jede der beiden Seilwinden 35,36 setzt sich aus zwei in Maschinenlängsrichtung hintereinander angeordneten und mit einem Kettenantrieb 40 miteinander verbundenen, Rillen aufweisenden Umlenkrollen 41 zusammen. Die beiden Stütz- und Führungs-Rollen 18,19 und die der Trommel 33 zugeordneten Draht- bzw. Seil-Umlenkrollen 41 sind in ihrem Durchmesser vorzugsweise gleich groß. Diese Rollen sind für eine Umlenkung um wenigstens 90° der relativ biegesteifen Drähte, je nach Draht-Querschnittsbemessung, mit einem Mindest-Durchmesser vorzugsweise von wenigstens einem Meter ausgebildet. Im Mittelbereich der beiden Trägerrahmen 23,24 ist eine Draht- bzw. Seil-Reserve-Trommel 42,43 vorgesehen (siehe auch Fig.2), die mit Hilfe eines am Ausleger-Arm 17 befestigten Hakens 44 transportierbar sind. Jede Seilwinde 35,36 weist einen eigenen Dreh-Antrieb 45 auf, der jeweils über entsprechende Hydraulikleitungen mit einer zentralen Hydraulikpumpe 46 verbunden ist.

Mit a ist die Soll-Lage bzw. Höhen-Lage des Tragseiles 3, mit b die Soll-Lage bzw. Höhen-Lage des im Querschnitt wesentlich stärkeren Fahrdrahtes 2 und mit c der Abstand zwischen Tragseil 3 und Fahrdraht 2 bezeichnet. Die als höhenverstell- und seitenverschwenkbare Bediener-Kabine bzw. Fahr-Korb 47 ausgebildete Arbeitsbühne 13 ist neben einer Material-Lagerstelle 48 angeordnet. Sämtliche auf der Maschine 1 angeordneten Antriebe, insbesondere 9,15,16,45 sind durch eine zentrale, insbesondere eine digitale Zugkraft-Anzeige 49 aufweisende Steuereinrichtung 50 fernsteuerbar, die in der Bediener-Kabine 47 angeordnet ist. Diese ist mit strichpunktierten Linien in der jeweiligen Arbeitsposition (Fig.1 und 2) dargestellt, bei der eine Bedienungsperson 51 die Bedienung der Steuereinrichtung 50 und die Befestigung des Tragseiles 3 und des Fahrdrahtes 2 auf einem mit einem Fahrleitungsmasten 52 verbundenen Ausleger 53 durchführt. Der Maschine 1 ist ein über einen Antrieb 54 selbstverfahrbarer Gleis-Oberbau- oder Turmwagen 55 mit über Antriebe höhen- und längsverstellbaren Arbeitsgerüst 56 zum Aufbau bzw. zur Lagerung für den Fahrdraht 2 und das Tragseil 3 miteinander verbindenden Einzelteile 57 bzw. der Teile für die Befestigung der mit den jeweiligen Masten 52 verbundenen Ausleger 53 nachgeordnet. Im vorderen Maschinenendbereich ist ein höhen- und seitenverstellbarer Arbeitskran 58 für den Zutransport aller Teile, zum Beispiel der Einzelteile 57, angeordnet. Im Bereich von der Seilwinde 35,36 und der zugeordneten Stütz- und Führungs-Rolle 18,19 ist jeweils ein am Trägerrahmen 24 bzw. 23 angeordneter, am Fahrdraht bzw. am Tragseil 2,3 anliegender und gegebenenfalls mit einem Wegmesser verbundener Spannungsprüfer 59,60 zur Aufrechterhaltung bzw. meßbaren Feststellung einer konstanten bzw. wahlweisen Seil- bzw. Drahtspannung vorgesehen, der mit der zentralen Steuereinrichtung 50 sowie dem jeweiligen Seilwinden-Antrieb 45 und dem Haupt- bzw. Fahrantrieb 9 verbunden ist. Die Spannung des Fahrdrahtes und Tragseiles beträgt etwa 1000 zu 700 kg. Die als seitenverstellbarer Schwenk-Kran 22 ausgebildete und mit einem Höhenmeß- und Anzeigeorgan 61 verbundene Hub-Vorrichtung 20 ist im Bereich des einen Maschinenrahmen-Endes 62 unmittelbar hinter der Fahrkabine 11 angeordnet. Die über die Antriebsanordnung 12 höhenverstell- und seitenverschwenkbare, als Bediener-Kabine bzw. Fahr-Korb 47 ausgebildete Arbeitsbühne 13 ist im Bereich des anderen Maschinenrahmen-Endes 63 neben der Material-Lagerstelle 48 angeordnet.

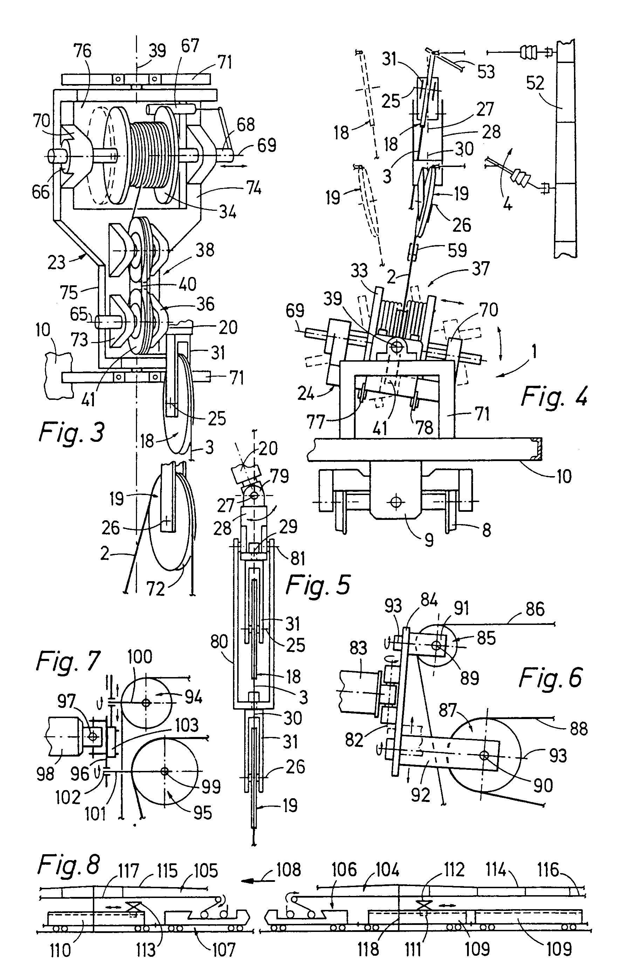

Wie insbesondere in den Fig.1 und 2 dargestellt, weist jede Seilwinde 35,36 eine weitere Umlenkrolle 64 auf, die jeweils über den Kettenantrieb 4o mit der benachbarten Umlenkrolle 41 drehverbunden ist. Beide gleich großen, aber je Trägerrahmen 23 bzw. 24 im Durchmesser verschieden groß bemessenen Umlenkrollen 41,64 mit ihren jeweiligen Umlenkrollen-Achsen 65 sind zur mehrfachen Umwicklung durch das Tragseil 3 bzw. den Fahrdraht 2 zur meßbaren Erstellung eines entsprechenden Zugspannungs-Drehmomentes ausgebildet. Die mit einem Dreh-Antrieb 66 für den Einsatz beim Abwickeln des Drahtes oder Seiles 2,3 beaufschlagbare Draht- bzw. Seil-Trommel 33,34 ist jeweils mit einem am Trägerrahmen 23,24 angeordneten Antrieb 67 zur Verschiebung quer zur Maschinenlängsrichtung verbunden. Dazu ist jeweils eine mit der Trommel 33 bzw. 34 verbundene und je Trommel entsprechend lang ausgebildete Trägerachse 68 mit einer Drehachse 69 in einem mit dem Trägerrahmen 23,24 verbundenen Lagerbock 7o querverschiebbar gelagert. Jeder der beiden Trägerrahmen 23,24 ist auf vertikalen, mit dem Maschinenrahmen 1o verbundenen Lagerböcken 71 über die Achsen 39 verschwenkbar abgestützt. Die Arbeitsbühne 13 bzw. Bediener-Kabine 47 ist mit vollen Linien in der Überstellposition dargestellt. Zwei von vielen möglichen äußeren seitlichen Arbeitsstellungen der Bediener-Kabine 47 sind mit strichpunktierten Linien in Fig.2 ersichtlich. Die Dreh-Rollen-Achsen 25,26 der Stütz-und Führungs-Rollen 18,19 sowie die Umlenkrollen-Achsen 65 der Seilwinden 35,36 und die Drehachsen 69 der beiden Draht- bzw. Seil-Trommeln 33,34 sind der Einfachheit halber in horizontaler Lage (Mittel-Stellung) dargestellt. Die Lage dieser Achsen ist dann gegeben, wenn sich die Stütz- und Führungs-Rollen 18,19 im Arbeitseinsatz bei dem - im zick-zack-Verlauf zu verlegenden - gespannten Fahrdraht 2 bzw. Tragseil 3 genau über der Maschinenlängsachse befinden bzw. auch in der Überstellposition. Bei einer seitlichen Auslenkung der Stütz- und Führungs-Rollen 18,19 entsprechend dem vorschriftsmäßigen zick-zack-förmigen Seitenverlauf der Oberleitung 4 - mit einer maximalen Entfernung von etwa 4o cm in bezug auf die Gleismittel-Linie - sind diese Achsen, wie später noch insbesondere in Fig.3 und 4 beschrieben wird, in bezug auf die Horizontale etwas geneigt angeordnet. Auch in Fig.1 wurden zum besseren Verständnis die einzelnen Stütz- und Führungs- bzw. Umlenk-Rollen und Trommeln mit ihren Lagerungen in vertikaler Stellung dargestellt, obwohl in der Arbeitsstellung - in Abstellung der seitlichen Fahrdraht- bzw. Tragseil-Abweichung zur Gleisachse (die in der Praxis etwa bis zu 4o cm beträgt) eine geringe Schrägstellung, wie z.B. in Fig.3 ersichtlich, gegeben ist.

Die in Fig.3 dargestellten Stütz- und Führungs-Rollen 18,19 sind in einer durch Verschwenkung des Schwenk-Kranes 22 seitlichen Lage in bezug auf die Maschinenlängsachse dargestellt, wobei die beiden Dreh-Rollen-Achsen 25,26 zur Horizontalen geringfügig geneigt sind. Ebenso sind die beiden Umlenkrollen-Achsen 65 der Seilwinde 36 bzw. auch der in dieser Figur nicht dargestellten Seilwinde 35 für den Fahrdraht 2 sowie die Drehachse 69 der Seil-Trommel 34 bzw. auch der Draht-Trommel 33 für den Fahrdraht 2 zur Horizontalen etwas geneigt angeordnet. Jede der beiden Stütz- und Führungs-Rollen 18,19 weist eine Führungs-Rille 72 zur Aufnahme des Fahrdrahtes 2 bzw. Tragseiles 3 auf. Jede der beiden die Seilwinde 36 bildenden kleineren Umlenkrollen 41 und 64 ist auf mit dem Trägerrahmen 23 verbundenen Lagerböcken 73 um die Umlenkrollen-Achsen 65 drehbar gelagert. Der wippenartige, am Maschinenrahmen 1o gelagerte Trägerrahmen 23 ist im wesentlichen aus einem zur Lagerung der Trommel 34 vorgesehenen unten offenen Rahmenteil 74 und einem an diesen anschließenden, zur Lagerung der Seilwinde 36 vorgesehenen Mittel-Träger 75 gebildet. Der zweite, mit der Draht-Trommel 33 der beiden größeren Umlenkrollen 41 und 64 bzw. der Seilwinde 35 verbundene Trägerrahmen 24 ist gleichartig, jedoch etwas größer und stärker ausgebildet. Eine im unten offenen Rahmenteil 74 vorgesehene Öffnung 76 ist so groß ausgebildet, daß die entsprechende Trommel 34 problemlos mit Hilfe des Antriebes 67 querverschoben werden kann.

In Fig.4 ist der wippenartige Trägerrahmen 24 mitsamt der darauf angeordneten Draht-Trommel 33 und vorderen größeren Umlenkrolle 41 der Seilwinde 35 mit der sich aus der geringfügigen seitlichen Verschwenkung der Stütz- und Führungs-Rollen 18,19 ergebenden Neigung erkennbar. Die entsprechend dem zick-zack-förmigen Seitenverlauf der Oberleitung 4 mögliche gegenüberliegende und der jeweiligen Stellung entsprechende Seiten- bzw. Schwenkposition ist durch strichlierte Linien dargestellt. Der Trägerrahmen 24 für den Fahrdraht 2 - ebenso auch der Trägerrahmen 23 für das Tragseil 3 - ist jeweils in der seitlichen Dreh- bzw. Schwenkbewegung um die in Maschinenlängsrichtung verlaufenden Achsen 39 durch Feder- bzw. Anschlagglieder 77,78 begrenzt, die mit dem Trägerrahmen 24 bzw. 23 verbunden und je nach Schwenklage zur Anlage an den vertikalen Träger des mit dem Maschinenrahmen 1o verbundenen Lagerbockes 71 ausgebildet sind.

Die in Fig.5 ersichtlichen Stütz- und Führungs-Rollen 18,19 liegen in einer vertikalen Ebene, in der die beiden Dreh-Rollen-Achsen 25,26 senkrecht zu der vertikalen Achse 27 eines mit dem Ausleger-Arm 17 der Hub-Vorrichtung 2o verbundenen Gelenkes 79 angeordnet sind. Die Rollen-Halterung 31 der für das Tragseil 3 vorgesehenen Stütz- und Führungs-Rolle 18 ist direkt am Tragglied 28 befestigt und die Rollen-Halterung 31 der für den Fahrdraht 2 vorgesehenen Stütz- und Führungs-Rolle 19 ist auf einem Träger 8o um die Schwenkachse 3o verschwenkbar gelagert. Dieser Träger 8o ist um eine senkrecht zur vertikalen Achse 27 verlaufende horizontale Achse 81 verschwenkbar am Tragglied 28 gelagert und mit dem Antrieb 32 (Fig.1) zur Höhenverstellung der Rolle 19 zur anderen Rolle 18 verbunden.

Bei der in Fig.6 ersichtlichen Ausführungs-Variante ist ein über eine etwa vertikale Achse 82 mit einer höhen- und seitenverstellbaren, vorzugsweise als Schwenk-Kran ausgebildeten Hub-Vorrichtung 83 verbundenes Tragglied 84 vorgesehen, an dem eine Stütz- und Führungs-Rolle 85 für ein Tragseil 86 und darunter eine weitere, im Durchmesser größere Stütz- und Führungs-Rolle 87 für einen Fahrdraht 88 befestigt ist. Jede der beiden Stütz- und Führungs-Rollen 85,87 ist um eine Dreh-Rollen-Achse 89,9o drehbar auf einer Rollen-Halterung 91,92 gelagert. Jede dieser Rollen-Halterungen 91,92 ist um eine senkrecht zu den Dreh-Rollen-Achsen 89,9o verlaufende Schwenkachse 93 drehbar am Tragglied 84 gelagert. Die untere Rollen-Halterung 92 kann außerdem noch entsprechend den dargestellten kleinen Pfeilen in Richtung der vertikalen Achse 82 am Tragglied 84 verschiebbar ausgebildet sein. Auf diese Weise ist der gleichbleibende Abstand zwischen dem Tragseil 86 und Fahrdraht 88 während der Abwicklung bzw. Montage wahlweise verstellbar.

Das in Fig.7 ersichtliche Ausführungsbeispiel zeigt ein mit Stütz- und Führungs-Rollen 94 und 95 für ein Tragseil bzw. einen Fahrdraht verbundenes Tragglied 96, welches über ein Kardangelenk 97 allseits verschwenkbar mit dem Ausleger-Arm eines höhen- und seitenverschwenkbaren Kranes bzw. einer höhen- und seitenverstellbaren Hub-Vorrichtung 98 verbunden ist. Jede der beiden Stütz- und Führungs-Rollen 94,95 ist jeweils um eine Dreh-Rollen-Achse 99 drehbar auf einer Rollen-Halterung 1oo bzw. 1o1 gelagert, die jeweils um eine senkrecht zur Achse 99 bzw. in Längsrichtung der Rollen-Halterung 1oo bzw. 1o1 verlaufende jeweilige Schwenkachse 1o2 verdrehbar am Tragglied 96 befestigt ist. Die obere Rollen-Halterung 1oo ist, wie an Hand der dargestellten Pfeile ersichtlich, auf dem Tragglied 96 höhenverschiebbar gelagert und mittels eines Hydraulikzylinders 1o3 zur Rollen-Halterung 1o1 während eines Verlege- oder Aufnahme-Vorganges einstellbar, so daß die Distanz zwischen dem Tragseil und dem Fahrdraht der Oberleitung wahlweise veränderbar ist.

Im folgenden wird die Funktionsweise der erfindungsgemäß ausgebildeten Maschine an Hand der Fig.1 bis 5 näher beschrieben.

Für den Arbeitseinsatz der Maschine 1 werden die Anfangsstücke des auf den Trommeln 33 und 34 aufgewickelten Fahrdrahtes 2 bzw. Tragseiles 3 zweimal jeweils um die beiden größeren bzw. kleineren Umlenkrollen 41,64 der beiden Seilwinden 35,36 herumgewickelt, durch die entsprechenden Spannungsprüfer 59 bzw. 6o hindurchgeführt bzw. an diese angelegt und anschließend in die Führungs-Rillen 72 der beiden Stütz- und Führungs-Rollen 18,19 gelegt. Anschließend werden die beiden Anfangsstücke zu Beginn eines beispielsweise bis zu 12oo m langen Streckenabschnittes an einer provisorischen Befestigung mit einem der Fahrleitungsmaste 52 verbunden. Durch Beaufschlagung der Antriebe 15 und 21 wird der Schwenk-Kran 22 der Hub-Vorrichtung 2o solange mit seinem Ausleger-Arm 17 höhenverstellt, bis das Tragseil 3 und der Fahrdraht 2 im Bereich zwischen den Stütz- und Führungs-Rollen 18,19 und der provisorischen Befestigung in die gewünschte Soll-Höhenlage a bzw. b zu liegen kommt. Der gewünschte Soll-Abstand zwischen Tragseil 3 und dem Fahrdraht 2 wird durch Beaufschlagung des Antriebes 32 mit entsprechender Höhenverlagerung der Stütz- und Führungs-Rolle 19 eingestellt. Die inzwischen in die Bediener-Kabine bzw. den Fahr-Korb 47 gestiegene Bedienungsperson 51 beaufschlagt mit Hilfe der Steuereinrichtung 5o die Höhenverstellantriebe 13, so daß der Fahr-Korb 47 in die gewünschte, mit strichpunktierten Linien angedeutete Höhenposition zu liegen kommt. Eine weitere, für den nachfolgenden Gleis-Oberbauwagen 55 zuständige Bedienungsperson befindet sich am Arbeitsgerüst 56. Zu Beginn des Arbeitseinsatzes wird nunmehr durch die Bedienungsperson 51 im Fahr-Korb 47 der Haupt-Fahrantrieb 9 mit beispielsweise bis zu 12 Tonnen Zugkraft mit den beiden Zugspannungs-Vorrichtungen 37,38 so lange betätigt, bis das Tragseil 3 und der wesentlich stärker zu spannende Fahrdraht 2 die geforderte Zugspannung, beispielsweise looo kg für den Fahrdraht 2 bzw. 7oo kg für das Tragseil 3 aufweisen. Diese vorgeschriebene Zugspannung wird jeweils durch die beiden elektronischen Spannungsprüfer 59,6o gemessen und der die Fernsteuerung durchführenden Bedienungsperson über die digitale Zugkraft-Anzeige 49 direkt angezeigt. Sobald die für die endgültige Montage der Oberleitung 4 vorgeschriebene vorschriftsmäßige Zugkraft für das Tragseil 3 und den Fahrdraht 2 erreicht ist, werden - unter kontinuierlicher Fortsetzung der langsamen Vorfahrt der Maschine 1 in Richtung des Pfeiles 14 - die Dreh-Antriebe 45 der beiden Seilwinden 35 und 36 sowie die Antriebe 67,66 der beiden Trommeln 33 und 34 beaufschlagt. Im folgenden wird durch die beiden Spannungsprüfer 59,6o automatisch jeder der beiden Dreh-Antriebe 45 so gesteuert, daß in Verbindung mit der kontinuierlichen Vorfahrt der Maschine 1 die geforderte Zugkraft für das Tragseil 3 bzw. den Fahrdraht 2 ununterbrochen aufrechterhalten wird. Zur Erzielung der seitlichen Auslenkung der Oberleitung 4 entsprechend ihrem zick-zack-förmigen Verlauf wird der Dreh-Antrieb 16 derart durch die Bedienungsperson 51 beaufschlagt, daß die Hub-Vorrichtung 2o mitsamt den Stütz- und Führungs-Rollen 18,19 seitlich entsprechend der genannten Auslenkung der Oberleitung 4 verschwenkt wird (siehe insbesondere Fig.3 und 4). Durch diese seitliche Verschwenkung des Schwenk-Kranes 22 kommt es unter voller Aufrechterhaltung der vorschriftsmäßigen Zugspannung zu einer Verdrehung der Stütz- und Führungs-Rollen 18,19 um die jeweilige Schwenkachse 29 bzw. 3o. Ebenso werden die Stütz- und Führungs-Rollen 18,19 mitsamt dem Tragglied 28 um die vertikale Achse 27 in bezug auf den Ausleger-Arm 17 automatisch in die Richtung des gespannten Tragseiles 3 bzw. Fahrdrahtes 2 verschwenkt (siehe die strichpunktierte Darstellung des Verschwenk-Kranes 22 in Fig.2 sowie die ebenfalls strichpunktierte Lage des Tragseiles 3 und Fahrdrahtes 2 vor der Befestigung mit dem Ausleger 53).

Nachdem die im Fahr-Korb 47 befindliche Bedienungsperson 51 einen seitlich vom Fahrleitungsmast 52 abstehenden Ausleger 53 erreicht - wobei die Maschine 1 an diesen Fahrleitungsmast 52 mit ihren Stütz- und Führungs-Rollen 18,19 bereits vorbeigefahren ist und mit den Rollen 18 und 19 den Fahrdraht und das Tragseil im gleichen Richtungsverlauf zu der Soll-Höhen- und Seiten-Lage gespannt aufrecht erhält - wird das gespannte Tragseil 3 durch diese Bedienungsperson 51 vorschriftsmäßig mit dem Ausleger 53 verbunden. Diese Verbindung kann bei kontinuierlicher Weiterfahrt oder auch bei Stillstand der Maschine 1 durchgeführt werden, wobei der Fahr-Korb 47 bei kontinuierlicher Weiterfahrt durch entsprechende teleskopartige Längsverschiebung des Ausleger-Armes der Arbeitsbühne 13 örtlich im Bereich des genannten Auslegers 53 für die Dauer der Befestigungsarbeit stillsteht. Bei Stillstand der Maschine 1 stehen auch die Dreh-Antriebe 45 der beiden Seilwinden 35,36 sowie die Antriebe 66 und 67 der beiden Trommeln 33,34 zwischenzeitlich still bzw. werden nicht mehr beaufschlagt. Nach durchgeführter vorschriftsmäßiger Verbindung des Tragseiles 3 mit dem Ausleger 53 wird die Arbeitsvorfahrt der Maschine 1 fortgesetzt, wobei die Hub-Vorrichtung 2o bzw. der Schwenk-Kran 22 mitsamt den Stütz- und Führungs-Rollen 18,19 unter entsprechender Beaufschlagung des Dreh-Antriebes 16 sowie unter voller Aufrechterhaltung der vorschriftsmäßigen Zugspannung allmählich auf die gegenüberliegende Seite entsprechend dem zick-zack-förmigen Seitenverlauf der Oberleitung 4 verschwenkt wird. Gleichzeitig wird durch die im Arbeitsgerüst 56 des nachfolgenden Gleis-Oberbauwagens 55 befindliche Bedienungsperson durch Anbringung der Einzelteile 57 die vorschriftsmäßige Verbindung in der gewünschten Lage (Soll-Lage) zwischen Tragseil 3 und Fahrdraht 2 zwischen den Fahrleitungsmasten durchgeführt. Dabei kann der Gleis-Oberbauwagen 55 kontinuierlich im Anschluß an die Maschine 1 weiterfahren, während das Arbeitsgerüst 56 über entsprechende Führungen und Antriebe am Maschinenrahmen je nach Erfordernis längsverschiebbar ist.

Durch die beschriebene Seitenverschwenkung des Schwenk-Kranes 22 mitsamt dem Ausleger-Arm 17 und den Stütz- und Führungs-Rollen 18,19 erfolgt automatisch eine entsprechende Verschwenkung der beiden mit den Seilwinden 35 bzw. 36 und den Trommeln 33 bzw. 34 verbundenen Trägerrahmen 23,24 um die in Maschinenlängsrichtung verlaufenden Achsen 39 (siehe insbesondere Fig.3 und 4). Diese automatische Verschwenkbewegung der Trägerrahmen 23,24 erfolgt durch die Zugkraft des seitlich ausgelenkten Tragseiles 3 bzw. Fahrdrahtes 2, kann aber auch gegebenenfalls durch entsprechende Antriebe unterstützt werden. Dabei verhindern die beiden Feder- bzw. Anschlagglieder 77,78 (Fig.4) eine zu starke Ausschwenkbewegung. Durch die Verschwenkung der beiden Trägerrahmen 23,24 ist sichergestellt, daß auch bei einer seitlichen Verschwenkung der Hub-Vorrichtung 2o mitsamt den Stütz- und Führungs-Rollen 18,19 ein problemloser Ablauf des unter Zugspannung stehenden Tragseiles 3 bzw. Fahrdrahtes 2 von der entsprechenden größeren bzw. kleineren Umlenkrolle 41 der Seilwinde 35 bzw. 36 möglich ist. Durch die mehrfache Umwicklung des Tragseiles 3 bzw. Fahrdrahtes 2 um die jeweiligen beiden Umlenkrollen 41 und 64 der Seilwinden 35,36 ist - unter konstanter Aufrechterhaltung der geforderten Zugspannung - ein Schlupf zuverlässig ausgeschlossen. Mit Hilfe der Antriebe 67 werden die beiden Seil- bzw. Draht-Trommeln 33,34 entsprechend der Aufwicklung querverschoben, so daß der abgewickelte Bereich des Tragseiles 3 bzw. Fahrdrahtes 2 immer genau senkrecht zu den beiden Umlenkrollen-Achsen 65 zu liegen kommt. Sobald im Rahmen der kontinuierlichen Arbeitsvorfahrt der nächste Fahrleitungsmast 52 mit einem Ausleger 53 erreicht ist, wird wieder durch die Bedienungsperson 51 im Fahr-Korb 47 die vorschriftsmäßige, endgültige Befestigung des Tragseiles 3 mit diesem Ausleger 53 durchgeführt. Anschließend erfolgt wieder eine allmähliche Seitenverschwenkung der beiden Stütz- und Führungs-Rollen 18,19 mit Hilfe des Dreh-Antriebes 16 auf die gegenüberliegende Seite gemäß dem in der Praxis bis etwa 8o cm breiten zick-zack-förmigen Verlauf der Oberleitung 4, wobei automatisch die Trägerrahmen 23,24 auf die gegenüberliegende Schwenkposition (siehe strichlierte Linien in Fig.4) mitverschwenkt werden. Durch das mit verschiedenen Anschlägen für den Höhenverstellantrieb 15 der Hub-Vorrichtung 2o bzw. des Schwenk-Kranes 22 versehene Höhenmeßorgan 61 ist eine exakte Beibehaltung der vorschriftsmäßigen Soll-Höhen-Lage a und b des Tragseiles 3 und Fahrdrahtes 2 durch Fernsteuerung der Bedienungsperson erreichbar. Sobald zum Beispiel durch einen Tunnel eine Absenkung der Soll-Lage a des Tragseiles 3 erforderlich ist, wird die gesamte Hub-Vorrichtung 2o entsprechend abgesenkt, wobei unter Beaufschlagung des Antriebes 32 die Stütz- und Führungs-Rolle 19 derart angehoben wird (siehe strichpunktierte Linien in Fig.1), daß der Fahrdraht 2 nach wie vor in die gleiche Soll-Höhenlage b umgelenkt wird. Nach Beendigung einer Sektion wird das Tragseil und der Fahrdraht unter voller Aufrechterhaltung der erforderlichen Zugspannung im Bereich des letzten Fahrleitungsmastes 52 befestigt und in bekannter Weise mit Gewichten verbunden, die nach Lösung dieser Befestigung die vorschriftsmäßige Zugspannung auf Dauer-Betrieb ausüben. Zu Beginn einer neuen Sektion werden die Anfangsstücke des Tragseiles 3 bzw. des Fahrdrahtes 2 wieder in der bereits beschriebenen Art und Weise befestigt und mit der erfindungsgemäßen Maschine 1 von den Trommeln 33 und 34 abgerollt.

Zur kontinuierlichen Verlegung der Oberleitung 4 unter Befestigung auf mit den Fahrleitungsmasten 52 verbundenen Auslegern 53, wobei Tragseil 3 und Fahrdraht 2 von Speicher-Trommeln 33,34 abgewickelt und unter Aufbringung einer gewünschten Zugkraft mit Hilfe der Zugspannungs-Vorrichtung 37 und 38 um die Stütz- und Führungs-Rollen 18,19 gespannt werden, werden im wesentlichen folgende Verfahrensschritte durchgeführt:
Das Tragseil 3 und der Fahrdraht 2 werden unter Spannung mit Hilfe der höhen- und seitenverstellbaren Stütz- und Führungs-Rollen 18,19 kontinuierlich in ihre jeweilige Soll-Höhen- und Seiten-Lage gebracht, in dieser unter Zugspannung gehalten und mit dem Ausleger 53 für eine endgültige Fixierung verbunden. Danach werden die Stütz- und Führungs-Rollen 18,19 unter unveränderter Beibehaltung ihrer Höhenlage und kontinuierlicher Weiterfahrt der Maschine 1 seitlich entsprechend dem zick-zack-förmigen Verlauf der Oberleitung 4 verschwenkt bzw. auf diesen Verlauf zentriert, wobei im gleichen Arbeitsgang der gespannte Fahrdraht 2 mit dem gespannten Tragseil 3 mit Hilfe eines mit der Maschine 1 gegebenenfalls gekuppelten Wagens 55 durch die Einzel-Befestigungselemente 57 zueinander in dieser Soll-Lage endgültig montiert werden. Das Tragseil 3 und der Fahrdraht 2 werden somit innerhalb einer Sektion immer von Fahrleitungsmast zu Fahrleitungsmast 52 weitergespannt, um nach Passieren eines Fahrleitungsmastes 52 in dem bereits durchfahrenen Abschnitt von Mast zu Mast die verschiedenen Befestigungen an dem in der Soll-Lage gehaltenen und gespannten Draht bzw. Seil durchzuführen.

Wie in Fig.8 dargestellt, ist einer zum Umbau von Oberleitungen 1o4,1o5 ausgebildeten Maschine 1o6 der gleichen wie in den Fig.1 bis 5 beschriebenen Bauart eine weitere, vorzugsweise gleichartig ausgebildete Maschine 1o7 in der durch einen Pfeil 1o8 dargestellten Arbeitsrichtung vorgeordnet. Beide Maschinen 1o6,1o7 sind zueinander spiegelbildlich angeordnet und mit wenigstens einem Arbeitsfahrzeug 1o9,11o mit jeweils einer in Maschinenlängsrichtung über einen Antrieb 111 längsverschieb- und höhenverstellbaren Arbeitsplattform 112,113 verbunden. Beide Oberleitungen 1o4,1o5 setzen sich jeweils aus einem Tragseil 114,115 und einem Fahrdraht 116,117 zusammen und sind über Ausleger auf Fahrleitungsmasten 118 befestigt. Im Arbeitseinsatz wird durch die in Arbeitsrichtung vorgeordnete Maschine 1o7 die alte Oberleitung 1o5 mit ihrem Fahrdraht und Tragseil unter kontinuierlicher Umlenkung in Richtung des kleinen Pfeiles auf entsprechende Trommeln aufgerollt, wobei durch auf der Arbeitsplattform 113 befindliche Bedienungspersonen das Tragseil von den entsprechenden vorangehenden Auslegern gelöst wird und die Einzelteile demontiert werden. Durch die nachfolgende Maschine 1o6 erfolgt in der bereits zu den Fig.1 bis 5 beschriebenen Weise ein kontinuierliches Abrollen und Montage der neuen Oberleitung 1o4 mit ihrem neuen Fahrdraht und neuem Tragseil, jeweils unter Aufrechterhaltung einer gleichbleibenden vorschriftsmäßigen Zugspannung. Durch auf der Arbeitsplattform 112 befindliche Bedienungspersonen erfolgt eine sofortige End-Fixierung des Tragseiles 114 am entsprechenden Ausleger, so daß nach dem Arbeitseinsatz der Maschine 1o6 und der Arbeitsfahrzeuge 1o9 die neue Oberleitung 1o4 in der gewünschten genauen Soll-Lage komplett und endgültig montiert ist.

## Patentansprüche

1. Gleisverfahrbare Maschine (1) zum kontinuierlichen Verlegen des Fahrdrahtes (2) und/oder des Tragseiles (3) einer Oberleitung (4) eines Gleises, mit einem auf Schienenfahrwerken (8) gelagerten und über einen auf die Verlegegeschwindigkeit abstellbaren Fahrantrieb (9) verfahrbaren Maschinenrahmen (10), Speichertrommeln (33,34) für den Fahrdraht (2) bzw. das Tragseil (3), einer diesen vorgeordneten und über einen Antrieb (45) und eine Steuereinrichtung beaufschlagbaren Zugspannungsvorrichtung (37,38) - der wenigstens eine Führungsrolle zugeordnet ist - und einer über Antriebe höhenverstellbaren und einen verschwenkbaren Auslegerarm (17) zur Höhen- und Seitenverstellung einer Stütz- und Führungsrolle (18,19) aufweisenden Hubvorrichtung (20), **dadurch gekennzeichnet,** daß die Zugspannungsvorrichtung (37,38) aus zwei im Durchmesser gleich großen, durch einen Antrieb (40) miteinander drehverbundenen und zur mehrfachen Umwicklung des Fahrdrahtes (2) bzw. Tragseiles (3) ausgebildeten, in Maschinenlängsrichtung voneinander distanzierten Umlenkrollen (41,64) zusammengesetzt ist, denen ein hydraulischer Drehantrieb (45) zugeordnet ist.

2. Maschine nach Anspruch 1, dadurch gekennzeichnet, daß der Durchmesser der die Zugspannungsvorrichtung (37) für den Fahrdraht (2) bildenden Umlenkrollen (41,64) größer als der Durchmesser für die Umlenkrollen der für die Abwicklung des Tragseiles (3) vorgesehenen Zugspannungsvorrichtung (38) ausgebildet ist.

3. Maschine nach Anspruch 1 oder 2, dadurch gekennzeichnet, daß im Bereich zwischen der als Seilwinde (35,36) wirksamen Zugspannungsvorrichtung (37,38) und der Stütz- und Führungsrolle (18,19) ein am Fahrdraht (2) bzw. Tragseil (3) anliegender Spannungsprüfer (59,60) zur Aufrechterhaltung bzw. Feststellung einer konstanten bzw. wahlweisen Seil- bzw. Drahtspannung vorgesehen ist, der mit einer zentralen Steuereinrichtung (50) sowie dem jeweiligen Seilwindenantrieb (45) verbunden ist.

4. Maschine nach einem der Ansprüche 1, 2 oder 3, dadurch gekennzeichnet, daß der Drehantrieb (45) durch eine digitale Zugkraftanzeige (49) aufweisende zentrale Steuereinrichtung (50) fernsteuerbar ist.

5. Maschine nach einem der Ansprüche 1 bis 4, dadurch gekennzeichnet, daß der die beiden in Maschinenlängsrichtung hintereinander angeordneten Umlenkrollen (41,64) miteinander verbindende Antrieb (40) durch einen Kettenantrieb gebildet ist.

6. Maschine nach einem der Ansprüche 1 bis 5, dadurch gekennzeichnet, daß die Umlenkrollen (41,64) Rillen aufweisen und der Rollendurchmesser wenigstens einen Meter beträgt.

7. Maschine nach einem der Ansprüche 1 bis 6, dadurch gekennzeichnet, daß die Zugspannungsvorrichtungen (37,38) jeweils auf einem eigenen, mit einer Speichertrommel (33 bzw. 34) verbundenen Trägerrahmen (23,24) angeordnet sind, der jeweils um eine in Maschinenlängsrichtung verlaufende Achse (39) verschwenkbar am Maschinenrahmen (10) gelagert ist.

8. Maschine nach einem der Ansprüche 1 bis 7, dadurch gekennzeichnet, daß die Umlenkrollen (41,64) der Zugspannungsvorrichtung (37,38) und die mit einer Führungsrille (72) versehene Stütz- und Führungsrolle (18,19) in ihrem Durchmesser gleich groß und für eine Umlenkung des Fahrdrahtes (2) bzw. Tragseiles (3) um wenigstens 90° ausgebildet sind.

## Claims

1. A machine (1), mobile on a railway track, for continuously installing the contact wire (2) and/or the supporting cable (3) of an overhead line (4) of a railway track, comprising a machine frame (10) mounted on on-track undercarriages (8) and movable by means of a motive drive (9) which may be adjusted to the installing speed, storage drums (33, 34) for the contact wire (2) and the supporting cable (3) respectively, a tensile stress device (37, 38) arranged in front of the said storage drums and operable by means of a drive (45) and a control device, and with which at least one guide roller is associated, and a lifting device (20) which is vertically adjustable by means of drives and has a pivotable jib arm (17) for the vertical and lateral adjustment of a support- and guide roller (18, 19), characterised in that the tensile stress device (37, 38) is composed of two deflection rollers (41, 64) of equal size in diameter, rotationally connected to one another by means of a drive (40) and designed for multiple winding around by the contact wire (2) and the supporting cable (3) respectively, and situated at a distance apart from one another in the longitudinal direction of the machine, with which deflection rollers a hydraulic rotary drive (45) is associated.

2. A machine according to claim 1, characterised in that the diameter of the deflection rollers (41, 64) forming the tensile stress device (37) for the contact wire (2) is designed so as to be greater than the diameter of the deflection rollers of the tensile stress device (38) provided for the unwinding of the supporting cable (3).

3. A machine according to claim 1 and 2, characterised in that in the region between the tensile stress device (37, 38) acting as cable winch (35, 36) and the support- and guide roller (18, 19) there is provided a tension detector (59, 60), adjoining the contact wire (2) and the supporting cable (3) respectively, for maintaining or measurably establishing a constant or optional cable or wire tension, the said tension detector being connected to a central control device (50) and to the respective cable winch drive (45).

4. A machine according to one of claims 1, 2 or 3, characterised in that the rotary drive (45) is remotely controllable by means of a central control device (50) having a digital tension indicating means (49).

5. A machine according to one of claims 1 to 4, characterised in that the drive (40) connecting to one another the two deflection rollers (41, 64) arranged in series in the longitudinal direction of the machine is formed by a chain drive.

6. A machine according to one of claims 1 to 5, characterised in that the deflection rollers (41, 64) have grooves and the roller diameter is at least one metre.

7. A machine according to one of claims 1 to 6, characterised in that the tensile stress devices (37, 38) are arranged on respective individual support frames (23, 24), connected to a storage drum (33 and 34 respectively), the support frames being mounted in each case on the machine frame (10) so as to be pivotable about an axis (39) extending in the longitudinal direction of the machine.

8. A machine according to one of claims 1 to 7, characterised in that the deflection rollers (41, 64) of the tensile stress device (37, 38) and the support- and guide roller (18, 19) provided with a guide groove (72) are designed so as to be the same size in their diameter and for the deflection of the contact wire (2) and the supporting cable (3) respectively about at least 90⁰.

## Revendications

1. Machine déplaçable par roulement (1) pour la pose en continu du fil de contact (2) et/ou du câble porteur (3) d'une caténaire (4) d'un voie ferrée comprenant un châssis de machine (10) logé sur des trains de roulement sur rails (8) et déplaçable par un dispositif de locomotion (9) pouvant être réglé à la vitesse de pose, des tambours de stockage (33,34) pour le fil de contact (2) et le câble porteur (3), un dispositif de contrainte de traction (37,38) placé devant ceux-ci et pouvant être sollicité par un dispositif d'entraînement (45) et un dispositif de commande - et auquel est associée au moins une poulie de guidage - et un dispositif de levage (20) déplaçable en hauteur par des commandes et présentant un bras de potence (17) pivotant pour le déplacement latéral et en hauteur d'une poulie de support et de guidage (18,19), caractérisée en ce que le dispositif de contrainte de traction (37,38) est constitué de deux poulies de renvoi (41,64) dont le diamètre est identique, solidaires en rotation l'une avec l'autre par une commande (40) et réalisées pour l'enroulement multiple du fil de contact (2) et du câble porteur (3), respectivement, placées à une certaine distance l'une de l'autre dans la direction longitudinale de la machine, et auxquelles est associée une commande d'entraînement en rotation hydraulique (45).

2. Machine selon la revendication 1, caractérisée en ce que le diamètre des poulies de renvoi (41,64) constituant le dispositif de contrainte de traction (37) du fil de contact (2) est plus grand que le diamètre des poulies de renvoi du dispositif de contrainte de traction (38) prévu pour le déroulement du câble porteur (3).

3. Machine selon la revendication 1 ou 2, caractérisée en ce qu'il est prévu au voisinage entre le dispositif de contrainte de traction (37,38) agissant comme treuil à câble (35,36) et la poulie de support et de guidage (18,19) un dispositif de vérification des contraintes (59,60) s'appliquant contre le fil de contact (2) et le câble porteur (3), respectivement, pour le maintien ou la détermination d'une contrainte de câble ou de fil constante et sélective, respectivement, qui est relié à un dispositif de commande centrale (50) ainsi qu'à la commande de treuil àcâble (45) respective.

4. Machine selon l'une des revendications 1, 2 ou 3, caractérisée en ce que la commande d'entraînement en rotation (45) peut être commandée à distance par un dispositif de commande centrale (50) présentant un indicateur numérique de force de traction (49).

5. Machine selon l'une des revendications 1 à 4, caractérisée en ce que le dispositif d'entraînement (40) reliant entre elles les deux poulies de renvoi (41,64) disposées l'une derrière l'autre dans la direction longitudinale de la machine, est constitué par un dispositif d'entraînement à chaîne.

6. Machine selon l'une des revendications 1 à 5, caractérisée en ce que les poulies de renvoi (41,64) présentent des rainures, et que le diamètre des poulies est d'un mètre au moins.

7. Machine selon l'une des revendications 1 à 6, caractérisée en ce que les dispositifs de contrainte de traction (37,38) sont disposés chacun sur un châssis de support (23,24) propre relié à un tambour de stockage (33 ou 34), et dont chacun est monté de façon pivotante au châssis de machine (10) autour d'un axe (39) s'étendant dans la direction longitudinale de la machine.

8. Machine selon l'une des revendications 1 à 7, caractérisée en ce que les poulies de renvoi (41,64) du dispositif de contrainte de traction (37,38) et la poulie de support et de guidage (18,19) pourvue d'une rainure de guidage (72) ont un diamètre de même grandeur et sont réalisées pour une déviation du fil de contact (2) et du cable porteur (3), respectivement, d'au moins 90°.
